# FASCICULE DE BREVET EUROPEEN

(11) **EP 1 084 942 B1**
(45) Date de publication et mention de la délivrance du brevet: **25.08.2004**
(21) Numéro de dépôt: 00420192.7
(22) Date de dépôt: 14.09.2000
(51) Int. Cl.: B62D 43/10, B62D 25/20

(54) **Structure formant plancher arrière et procédé de fabrication d'un véhicule automobile incorporant une telle structure**
Rückwärtige Bodenplatte formende Struktur und Verfahren zur Herstellung eines Kraftfahrzeugs mit einer solchen Struktur
Rear floor forming structure and method of making an automotive vehicle incorporating such a structure

(30) Priorité: 16.09.1999 FR 9911797
(43) Date de publication de la demande: 21.03.2001
(73) Titulaire: Inoplast, 07340 Saint Desirat (FR)
(72) Inventeur: Jacquette, Jean-Bruno, 62800 Châteauneuf (FR); Louchet, Vincent, 38090 Villefontaine (FR)
(74) Mandataire: Myon, Gérard Jean-Pierre

(56) Documents cités:
- EP-A- 0 270 097
- DE-A- 3 045 071
- FR-A- 2 773 132

## Description

L'invention a trait à une structure formant plancher arrière de véhicule automobile et à un procédé de fabrication d'un véhicule automobile.

Dans les véhicules automobiles, il est connu de réaliser un plancher en tôle emboutie fixé, par exemple par soudage, sur des longerons arrières du véhicule. Lorsqu'on souhaite créer dans un tel plancher un logement de réception d'une roue de secours, ce logement est formé par emboutissage, ce qui limite la forme de ce logement car le procédé d'emboutissage impose une dépouille relativement importante et une profondeur relativement faible, notamment afin d'éviter un déchirement de la tôle. En outre, un plancher en tôle appartient à la plate-forme générale du véhicule et, à ce titre, n'est pas récupérable ou interchangeable, notamment en cas de choc sur la partie arrière du véhicule résultant dans une déformation plastique de ce plancher. Un plancher en tôle appartenant à la structure générale du véhicule ne peut pas être configuré de façon modulaire pour tenir compte du type exact du véhicule et de son degré d'équipement.

Par ailleurs, il existe des bacs en matière plastique prévus pour être posés au-dessus d'un plancher en tôle, former un logement de réception d'une roue de secours et/ou définir la surface de fond du coffre d'un véhicule. De tels bacs sont des pièces rapportées par rapport à un plancher qui doit, dans tous les cas, être prévu. En particulier, de tels bacs ne participent pas à la résistance mécanique du véhicule.

Il existe également des bacs, tels que connus de EP-A-0 270 097 ou de FR-A-2 773 132, qui sont prévus pour être intégrés dans un creux du châssis d'un véhicule. Le bac connu du document EP-A-0 270 097, qui correspond au préambule de la revendication 10, est moulé par soufflage de matière plastique, alors que le bac du document FR-A-2 773 132, qui correspond au préambule de la revendication 1, est tronqué vers l'avant, dans sa zone de raccordement au châssis. Dans tous les cas, une roue de secours reçue dans ces bacs est susceptible de mouvements de faibles amplitudes dans ces bacs, ce qui peut induire des chocs et des bruits désagréables pour les passagers.

L'invention vise à proposer une solution alternative aux planchers en tôle qui permette d'obtenir des formes de logement adaptées à la roue de secours d'un véhicule, mais également à d'autres éléments annexes ou accessoires, avec une grande modularité et une rigidité accrue par rapport aux bacs en plastique connus. L'invention vise à éviter les déplacements intempestifs de la roue de secours.

Dans cet esprit, l'invention concerne une structure réalisée par moulage de matière plastique et formant plancher arrière de véhicule automobile et logement de réception d'une roue de secours du véhicule, cette structure étant apte à être reçue dans un cadre d'accueil dudit véhicule et étant auto-portante à l'intérieur dudit cadre, ladite structure étant pourvue de moyens de centrage de ladite roue dans ledit logement, caractérisée en ce que ces moyens sont également des moyens d'immobilisation de la roue dans le logement et comprennent un pion fileté, un écrou prévu pour coopérer avec le filetage de ce pion et un plateau, alors que le pion, l'écrou et le plateau sont aptes à exercer sur la roue un effort d'immobilisation par pression dirigé vers le fond du logement précité.

La structure de l'invention est autoportante, en ce sens qu'il n'est pas nécessaire de prévoir un plancher en tôle pour la soutenir et qu'elle ne risque pas de se déformer à l'usage. A ce titre, elle participe à la rigidification de la partie arrière du véhicule entre les éléments du cadre d'accueil, tels que des longerons et/ou des traverses métalliques. Le fait que cette structure est réalisée par moulage permet de lui donner une forme précisément adaptée à sa fonction, sans les limitations inhérentes à l'emboutissage. En particulier, la forme de la structure de l'invention peut être adaptée au type exact du véhicule et à son degré d'équipement.

Selon des aspects avantageux de l'invention, la structure incorpore une ou plusieurs des caractéristiques suivantes :
- Elle forme des logements de réception d'éléments annexes ou accessoires du véhicule, tels qu'un bidon de lubrifiant, un câble de remorquage, des vêtements de protection, une trousse à outil ou de premiers secours, une boîte à ampoules, et/ou un cric de levage du véhicule. Ces différents logements peuvent être prévus sur l'élément de base formant plancher et/ou sur des parties annexes. Bien entendu, des logements pour d'autres objets peuvent être prévus, notamment pour des effets personnels du propriétaire ou du conducteur du véhicule.
- Le fond du logement est pourvu d'un manchon de réception du pion central d'immobilisation de la roue de secours, ce pion pouvant être immobilisé dans ce manchon par coopération de formes et portant des moyens d'encliquetage dans le manchon. Un montage rapide du pion dans le fond du logement est ainsi possible par un mouvement de translation selon l'axe du manchon.
- L'écrou est fendu et prévu pour être fretté dans un palier central d'un plateau d'immobilisation de la roue dans le logement. On peut prévoir que cet écrou est pourvu de saillies périphériques reçues dans des rainures internes longitudinales du palier, ces saillies étant déplaçables en translation dans ces rainures et aptes à être verrouillées dans des encoches prolongeant des rainures, par rotation de l'écrou par rapport à un axe central du palier. Ainsi, un montage et un démontage rapide et aisé du plateau par rapport au pion est possible, dans la mesure où l'écrou fendu peut être ouvert sur la majorité de la course de montage ou démontage du plateau, alors qu'il est fermé lors du mouvement final de vissage ou lors du mouvement initial de dévissage du plateau.
- Le plateau est pourvu de nervures de rigidification et de vissage/dévissage définissant entre elles des volumes de réception d'éléments annexes ou accessoires du véhicule.
- Un panneau de fermeture du logement est prévu, ce panneau étant moulé en matière plastique et formant des logements de réception d'éléments annexes ou accessoires du véhicule. Ce panneau constitue en fait le plancher du coffre arrière du véhicule et sa fabrication par moulage de matière plastique permet une grande adaptabilité au type exact et au niveau d'équipement du véhicule.
- La structure est équipée de grilles pourvues de clapets anti-retour de circulation d'air, uniquement entre le volume intérieur de l'habitacle du véhicule et l'atmosphère ambiante, et/ou d'une patte d'arrimage ou de remorquage. Ces éléments annexes sont intégrés à la structure moulée, par exemple par surmoulage, la structure de l'invention étant alors apte à remplir plusieurs fonctions pour le véhicule.

L'invention concerne également un procédé de fabrication d'un véhicule automobile intégrant une structure formant plancher telle que précédemment décrite et, plus spécifiquement un procédé dans lequel on moule une structure en matière plastique formant plancher arrière et logement de réception d'une roue de secours du véhicule ce procédé comprenant des étapes consistant à :
- équiper cette structure d'éléments annexes ou accessoires du véhicule et
- monter cette structure équipée sur un cadre du châssis du véhicule.

Grâce au procédé de l'invention, la fonction complète "plancher arrière et accessoires" peut être préparée sur un poste de travail ergonomiquement adapté avant son intégration dans un véhicule en cours de fabrication, ce qui évite à un opérateur de procéder à des opérations successives de garnissage à l'intérieur du coffre d'un véhicule. En pratique, la préparation de la fonction précitée peut être réalisée dans un autre atelier, voire chez un fournisseur, en fonction des spécifications propres du véhicule.

Selon un aspect avantageux, ce procédé consiste également à introduire une roue de secours dans le logement après montage de la structure sur le châssis et à immobiliser cette roue dans ce logement par encliquetage d'un pion central solidaire de, ou apte à être solidarisé avec, un dispositif de blocage de la roue dans le logement. La roue de secours est introduite dans le logement alors que la structure est déjà montée dans le véhicule car cette roue dépend généralement du type exact de pneumatiques montés sur le véhicule. La roue peut être déversée par une goulotte dans le logement de la structure, auquel cas elle ne doit pas être gênée par un pion central disposé dans le logement. Le procédé de l'invention permet de résoudre ce problème en prévoyant l'encliquetage du pion central postérieurement à l'introduction de la roue, cet encliquetage permettant d'immobiliser, en une opération rapide, la roue dans son logement.

L'invention sera mieux comprise et d'autres avantages de celle-ci apparaîtront plus clairement à la lumière de la description qui va suivre d'un mode de réalisation d'une structure formant plancher arrière de véhicule automobile et d'un procédé de fabrication d'un tel véhicule, donnée uniquement à titre d'exemple et faite en référence aux dessins annexés dans lesquels :

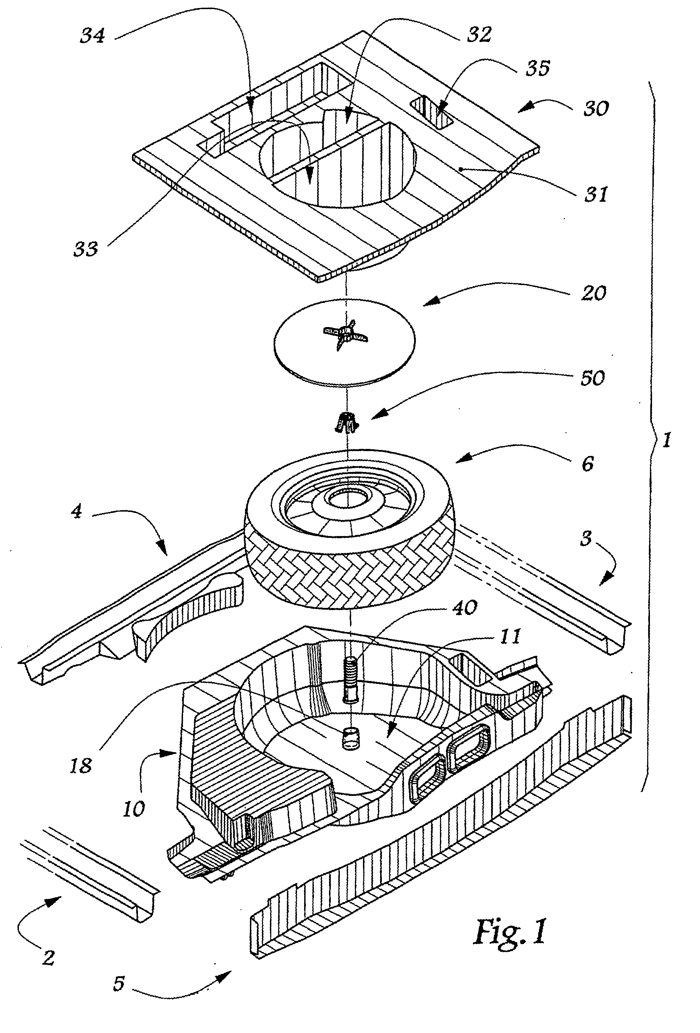

- La figure 1 est une vue en perspective éclatée d'une structure conforme à l'invention et de son environnement d'installation ;
- La figure 2 est une vue en perspective à plus grande échelle avec arrachement partiel de l'élément de base de la structure de la figure 1 et du pion central associé ;
- La figure 3 est une coupe axiale partielle selon la ligne III-III à figure 1 ;
- La figure 4 est une vue en perspective éclatée d'une partie de la structure dédiée au blocage de la roue de secours dans le logement de la structure de la figure 1 ;
- La figure 5 est une représentation schématique de principe d'une première étape de fabrication d'un véhicule automobile ;
- La figure 6 est une vue analogue à la figure 5 pour une seconde étape de fabrication et
- La figure 7 est une vue analogue à la figure 5 pour une troisième étape de fabrication.

La structure 1 représentée sur les figures est destinée à être disposée entre les longerons arrières 2 et 3, une traverse avant 4 et une traverse arrière 5 formant un cadre à l'arrière du châssis d'un véhicule automobile. Les éléments 2 à 5 sont métalliques et définissent entre eux une ouverture correspondant au fond du coffre du véhicule.

La structure 1 comprend une coque de base 10 moulée en matière plastique, telle que par exemple en résine thermodurcissable du type polyester, vinylester, époxyde ou polyuréthanne, ou en résine thermo-plastique du type à base de polyoléfine, de polypropylène ou analogue, ou de mousses de tels matériaux. Ces mouses ont une densité de l'ordre de 160 à 220 g/l et peuvent supporter des températures comprises entre 100 et 200°C, ce qui leur permet de résister à la température du tuyau d'échappement du véhicule dont le silencieux est généralement logé à proximité. Les résines utilisées peuvent être chargées ou non avec des fibres de renfort, telles que des fibres de verre, des fibres de carbone, des fibres métalliques ou végétales. Le moulage de la coque 10 peut être effectué par injection, compression, injection-compression ou extrusion-compression, en fonction de l'outillage utilisé et de la forme recherchée.

Comme la coque 10 participe à la rigidité de la partie arrière du véhicule, il s'avère particulièrement avantageux de la réaliser dans un matériau de moulage en feuilles du type SMC (Sheet Moulding Counpound) qui présente une excellente stabilité dimensionnelle.

L'emploi de matière plastique permet, à l'aide d'un seul outillage ou moule d'obtenir des formes complexes avec des surfaces globalement perpendiculaires à la surface principale de la coque 10, peu dépouillées et intégrant aisément des dispositifs de fixation, notamment par clipsage, qui ne peuvent que difficilement être obtenues par une technique d'emboutissage classique.

La coque 10 forme une cuvette 11 de réception d'une roue de secours 6 du véhicule, cette roue pouvant être de largeur identique à celle des autres roues du véhicule ou de largeur inférieure, en fonction des choix du constructeur.

La structure 1 comprend également un plateau 20 destiné à être monté sur la coque 10 en exerçant sur la roue 6 un effort d'immobilisation à l'intérieur de la cuvette 11.

Par ailleurs, la structure 10 comprend un couvercle 30 prévu pour être disposé sur les éléments 10 et 20, en les masquant et en constituant la surface visible du fond du coffre du véhicule.

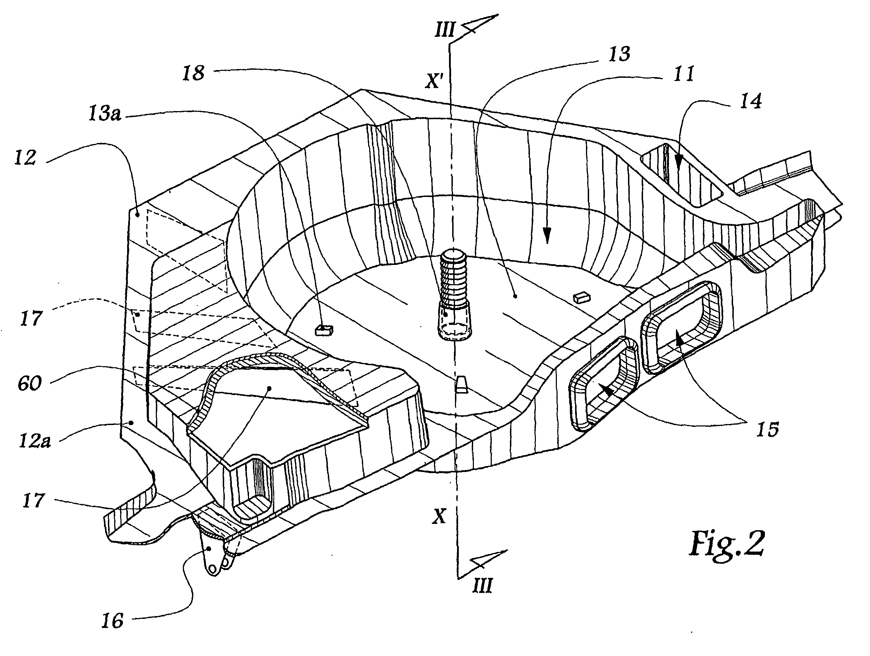

La coque 10 est plus particulièrement visible à la figure 2 et comprend un voile principal 12 sensiblement horizontal à partir duquel la cuvette 11 s'étend vers le bas. On note 13 le fond de la cuvette 11 et X-X' un axe central de cette cuvette.

Les bords 12a du voile 12 sont pourvus de moyens de fixation de la coque 10 sur les éléments 2 à 5, ces moyens de fixation pouvant être des orifices de passage de boulons, de goujons ou de rivets ou constituer une zone d'application d'un matériau adhésif, structurel ou bi-composant ou du type mastique polyuréthanne, époxyde ou équivalent. D'autres modes de fixation, notamment par vis autotaraudeuses ou agrafages, peuvent également être envisagés, la coque 10 pouvant être montée sur le cadre formé des éléments 2 à 5 par dessus ou par dessous.

Un logement 14 de réception d'un bidon d'huile non représenté est formé dans la coque 10, à proximité de la cuvette 11 par une dépression s'étendant vers le bas à partir du voile 12.

La cuvette 11 est également équipée de deux grilles 15 de circulation d'air entre le volume intérieur de la cuvette 11 et l'extérieur du véhicule. Ces grilles peuvent être équipées de volets formant clapet anti-retour afin que la circulation d'air entre le volume intérieur de la cuvette 11 et l'atmosphère ambiante se fasse uniquement dans un sens, par exemple de l'intérieur vers l'extérieur du véhicule, les grilles 15 constituant alors des orifices d'extraction d'air de l'habitacle du véhicule plus discrètes que les orifices prévus dans les custodes de certains véhicules de l'état de la technique car ils sont masqués par le pare-choc arrière.

Une patte 16 est surmoulée dans la coque 10 ou venue de matière avec celle-ci et s'étend vers le bas à partir du voile 12. Elle est pourvue d'un orifice de passage d'un lien flexible ou d'un crochet et permet l'arrimage ou le remorquage du véhicule.

Des taquets 13a sont prévus sur le fond 13 et servent d'appuis locaux pour la roue 6, alors que des nervures de rigidification 17 sont formées sur la face inférieure du voile 12.

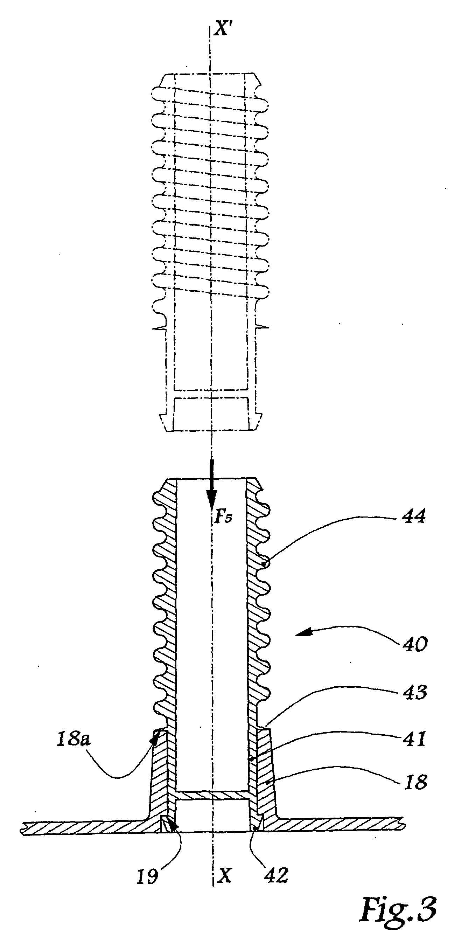

A proximité de son centre, le fond 13 forme un manchon 18 plus particulièrement visible à la figure 3. Ce manchon est venu de matière avec le fond 13 et définit un épaulement interne 19 dans sa partie inférieure. Un pion 40 est prévu pour être introduit dans le manchon 18 et comprend une partie cylindrique 41, de diamètre extérieur sensiblement égal au diamètre intérieur du manchon 18, et des moyens d'encliquetage contre l'épaulement 19, ces moyens étant formés par plusieurs languettes 42 en forme de harpon. Il est ainsi possible de fixer le pion 40 dans le manchon 18, en le faisant passer de la position en traits mixtes à la position en traits pleins à la figure 3, avec un mouvement de translation selon l'axe X-X', comme représenté par la flèche F₅.

Le pion 40 porte également une lèvre d'étanchéité 43 prévue pour venir en appui contre la surface supérieure d'extrémité 18a du manchon 18 lorsque les languettes 42 sont en prise contre l'épaulement 19.

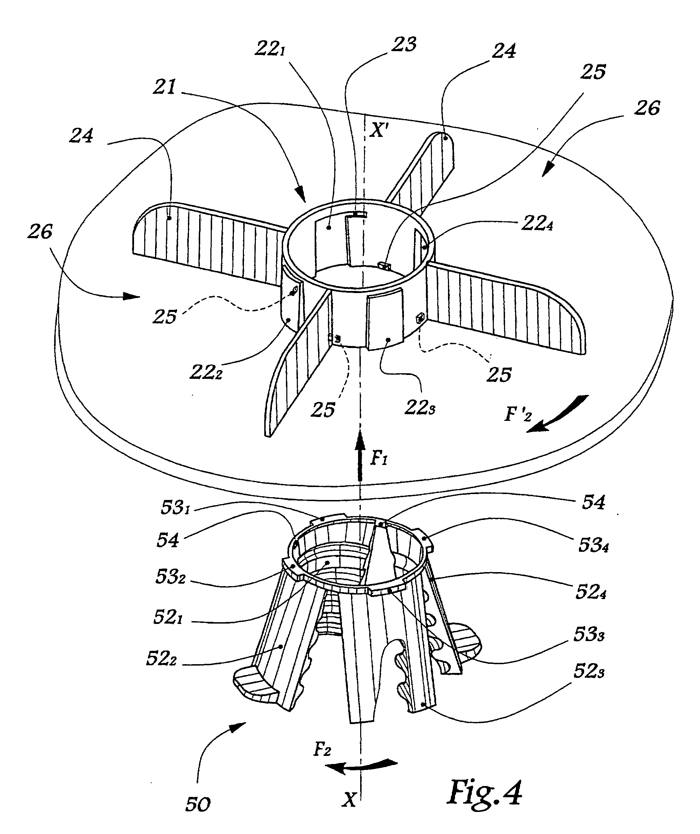

Dans sa partie qui dépasse du manchon 18, le pion 40 est pourvu d'un filetage 44 à filet rond. Ce filetage est prévu pour coopérer avec le filetage intérieur d'un écrou 50 plus particulièrement visible à la figure 4.

Cet écrou est formé d'une collerette 51 sur laquelle sont articulées quatre languettes 52₁, 52₂, 52₃ et 52₄ formant chacune approximativement un quart de cercle et dont la surface interne reproduit un taraudage à filet rond adapté pour coopérer avec le filetage 44 lorsque les languettes 52 forment ensemble une surface cylindrique sensiblement continue.

L'écrou 50 est prévu pour être introduit dans un palier central 21 du plateau 20 qui comprend quatre rainures longitudinales 22₁, 22₂, 22₃ et 22₄ de réception de quatre saillies radiales 53₁, 53₂ 53₃ et 53₄ de la collerette 51. A proximité de chaque rainure 22 est prévue une encoche 23, de telle sorte que lorsque l'écrou 50 est introduit dans le palier 21 dans le sens de la flèche F₁ à la figure 4, puis subit une rotation dans le sens de la flèche F₂, l'écrou 50 est immobilisé dans le palier 21, le palier jouant le rôle d'une frette pour l'écrou.

Le plateau 20 est par ailleurs pourvu de nervures de rigidification 24 qui permettent de l'entraîner en rotation F'₂ autour de son axe central, qui peut être confondu avec l'axe X-X', comme représenté à la figure 4.

Des doigts de retenue 25 sont prévus à proximité du bord inférieur du palier 21 et peuvent recevoir en appui des portées 54 définies sur la collerette 51, entre les languettes 52. Les doigts 25 ont une surface tournée vers le bas inclinée par rapport à l'axe X-X', de sorte qu'ils ne s'opposent pas au mouvement d'introduction représenté par la flèche F₁. Au contraire, leur surface supérieure est sensiblement perpendiculaire à l'axe X-X', ce qui leur permet de retenir efficacement l'écrou 50 à l'intérieur du palier 21.

Lorsque l'écrou 50 est immobilisé dans le palier 21 par coopération des éléments 53 et 23, il est possible de visser le plateau 20 sur le pion 40 et d'exercer ainsi, sur une roue 6 disposée dans la cuvette 11, un effort d'immobilisation par pression dirigée vers le fond 13.

Lorsqu'un utilisateur doit accéder à la roue 6, il lui suffit de faire subir au plateau 20 un mouvement de rotation dans le sens opposé à la flèche F₂ pour amener les saillies 53 dans les rainures 22, ce qui lui permet de soulever le plateau 20 alors que l'écrou 50 est encore en prise sur le pion 30. L'écrou 30 est ainsi libéré du palier 21 et l'effort de frettage sur cet écrou est supprimé, les languettes 52 pouvant alors être écartées pour atteindre la position représentée à la figure 4. L'ensemble formé des éléments 20 et 50 peut alors être soulevé par rapport aux éléments 10 et 40.

Lorsque l'utilisateur souhaite remettre en place le plateau 20, par exemple après avoir utilisé la roue 6 et l'avoir remplacée par une roue dégonflée, il lui suffit d'approcher l'écrou 50 autour du filet 40 et d'exercer sur le plateau 20 un effort vertical dirigé vers le fond 13 de la cuvette 11, ce qui a pour effet de coiffer l'écrou 50 avec le palier 21. Un mouvement de rotation selon la flèche F₂ permet alors de verrouiller l'écrou 50 à l'intérieur du palier 21, et de le maintenir en configuration serrée où les languettes coopèrent avec le filetage 44. La suite de ce mouvement de rotation permet de visser l'écrou 50 et le plateau 20 sur le pion 40.

Les mouvements de rotation à imprimer au plateau 20 sont transmis grâce aux nervures 24 qui constituent des éléments de prise en main pour un utilisateur.

Entre ces nervures 24 sont définis des volumes 26 qui peuvent être utilisés pour le stockage d'éléments annexes ou d'accessoires du véhicule, tels que des câbles, des chiffons ou une trousse à outils.

Le couvercle 30 comprend un voile principal 31 et définit plusieurs logements en creux 32, 33, 34 et 35 pouvant également recevoir des éléments annexes ou accessoires, tels que par exemple un câble de remorquage, des vêtements jetables de protection contre la pluie, une trousse à outils ou de premiers secours, une boîte d'ampoules ou un cric de lavage du véhicule et la manivelle associée. Bien entendu, la forme et la disposition des logements 32 à 35 dépendent des aménagements du véhicule, voire de son niveau d'équipement. En effet, ce couvercle peut être fabriqué indépendamment des éléments 10 à 50 et permet donc une grande adaptabilité par rapport à l'utilisation prévue du véhicule.

Les éléments 20, 30, 40 et 50 sont également réalisés en matière plastique et peuvent donc, tout comme la coque 10, être fabriqués en grande série avec un coût acceptable et sans les contraintes inhérentes au procédé d'emboutissage de tôle. Les mêmes matières que celles utilisées pour la coque 10 peuvent être employées.

Le couvercle 30 est avantageusement revêtu d'un matériau d'isolation phonique telle qu'une moquette, ce qui améliore le confort des passagers se trouvant dans l'habitacle du véhicule.

Comme la coque 10 est susceptible d'être disposée à proximité immédiate du pot d'échappement du véhicule, la surface inférieure du voile 12 et la surface externe de la cuvette 11 peuvent être revêtues d'une couche 60 d'un matériau d'isolation thermique, par exemple à base d'aluminium ou de couleur claire pour créer une surface de réflexion de la chaleur, afin d'éviter toute dégradation de la coque 10.

Selon un aspect non représenté de l'invention, la coque 10 peut intégrer une poutre de renfort du pare-choc arrière du véhicule.

Les éléments 10, 20, 30, 40 et 50 de la structure 1 peuvent être préparés en atelier avant leur incorporation dans le véhicule et être équipés des éléments annexes ou accessoires précédemment cités, de telle sorte qu'une structure 1 équipée de tels éléments annexes ou accessoires et formant une "fonction" quasiment autonome peut être acheminée sur la ligne de montage du véhicule, ce qui permet un gain de temps précieux sur cette ligne.

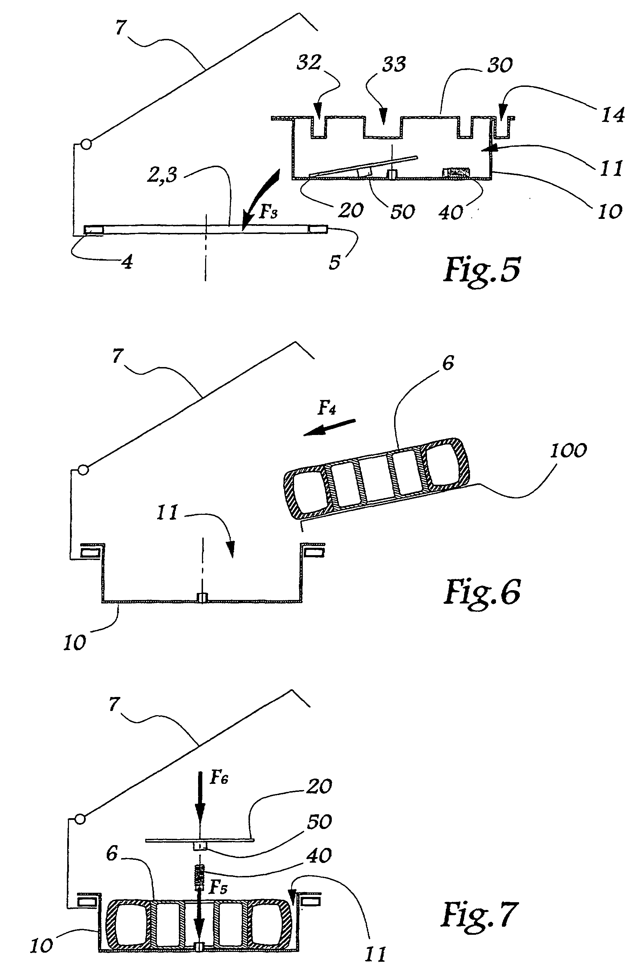

Comme représenté à la figure 5, la coque 10 peut être mise en place dans le coffre d'un véhicule en cours de fabrication, alors que le hayon correspondant 7 est ouvert, grâce à un mouvement d'introduction représenté par la flèche F₃.

Les éléments 20, 30, 40 et 50 sont alors retirés de la cuvette 11.

Dans un poste de montage suivant, une goulotte 100 permet d'acheminer la roue de secours 6 jusqu'au voisinage immédiat de la coque 10 et de faire tomber cette roue dans la cuvette 11 comme représentée par la flèche F₄. Compte tenu de l'orientation de la flèche F₄ par rapport à l'axe X-X', aucun obstacle ne doit être présent dans la cuvette 11 à cet instant.

Ensuite, et comme représenté à la figure 7, le pion 40 est mis en place selon un mouvement de translation sensiblement aligné sur l'axe X-X', comme représenté par la flèche F₅, ce qui est possible grâce au mode de fixation par encliquetage du pion 40 dans le manchon 18, une telle opération étant particulièrement rapide et aisée pour un opérateur. Il est alors possible de mettre en place de façon rapide le plateau 20 par une pression verticale F₆ ayant pour effet de refermer l'écrou 50 et un mouvement de vissage terminal permettant d'exercer sur la roue 6 un effort d'immobilisation efficace.

Selon une variante du procédé de l'invention, un ensemble comprenant le plateau 20, le pion 40 et l'écrou 50 peut être pré-assemblé et monté en une opération par encliquetage dans le manchon 18.

Le couvercle 30 peut alors être remis en place pour conférer un aspect esthétique satisfaisant au coffre du véhicule.

## Revendications

1. Structure (1) réalisée par moulage de matière plastique et formant plancher arrière de véhicule automobile et logement (11) de réception d'une roue de secours (6) du véhicule, ladite structure étant apte à être reçue dans un cadre d'accueil (2-5) dudit véhicule et étant autoportante à l'intérieur dudit cadre, ladite structure (1) étant pourvue de moyens (18, 20, 40, 50) de centrage de ladite roue (6) dans ledit logement (11), **caractérisée en ce que** lesdits moyens sont également des moyens d'immobilisation de ladite roue dans ledit logement et comprennent un pion fileté (40), un écrou (50) prévu pour coopérer avec le filetage (44) dudit pion et un plateau (20), alors que ledit pion, ledit écrou et ledit plateau sont aptes à exercer sur ladite roue (6) un effort d'immobilisation par pression dirigé vers le fond (13) dudit logement.

2. Structure selon la revendication 1, **caractérisée en ce qu'**elle forme des logements (14, 26, 32-35) de réception d'éléments annexes ou accessoires dudit véhicule, tels qu'un bidon de lubrifiant, un câble de remorquage, des vêtements de protection, une trousse à outils ou de premiers secours, une boîte d'ampoules et/ou un cric de levage du véhicule.

3. Structure selon l'une des revendications 1 ou 2, **caractérisée en ce que** ledit fond (13) dudit logement (11) est pourvu d'un manchon (18) de réception du pion central (40) d'immobilisation de ladite roue de secours (6).

4. Structure selon la revendication 3, **caractérisée en ce que** ledit pion (40) est immobilisé dans ledit manchon par coopération de formes (18, 41) et porte des moyens (42) d'encliquetage dans ledit manchon.

5. Structure selon l'une des revendications précédentes, **caractérisée en ce que** ledit écrou (50) est fendu et prévu pour être fretté dans un palier central (21) dudit plateau (20) pour l'immobilisation de ladite roue de secours (6) dans ledit logement (11).

6. Structure selon la revendication 5, **caractérisée en ce que** ledit écrou (50) est pourvu de saillies périphériques reçues dans des rainures internes longitudinales (22) dudit palier, lesdites saillies étant déplaçables en translation (F₁) dans lesdites rainures et aptes à être verrouillées dans des encoches (23) prolongeant lesdites rainures, par rotation (F₂) dudit écrou par rapport à un axe central (X-X') dudit palier.

7. Structure selon l'une des revendications 5 ou 6, **caractérisée en ce que** ledit plateau (20) est pourvu de nervures (24) de rigidification et de vissage/dévissage définissant entre elles des volumes (26) de réception d'éléments annexes ou accessoires du véhicule.

8. Structure selon l'une des revendications précédentes, **caractérisée en ce qu'**elle comprend un panneau (30) de fermeture dudit logement, ledit panneau étant moulé en matière plastique et formant des logements (32-35) de réception d'éléments annexes ou accessoires du véhicule.

9. Structure selon l'une des revendications précédentes, **caractérisée en ce qu'**elle est équipée de grilles (15) pourvues de clapets anti-retour de circulation d'air, uniquement entre le volume intérieur de l'habitacle du véhicule et l'atmosphère ambiante, et/ou d'une patte (16) d'arrimage ou de remorquage.

10. Procédé de fabrication d'un véhicule automobile, dans lequel on moule une structure (1) en matière plastique formant plancher arrière et logement (11) de réception d'une roue de secours (6) du véhicule, **caractérisé en ce qu'**il comprend des étapes consistant à :
- équiper ladite structure d'éléments annexes ou accessoires du véhicule et
- monter (F₃) ladite structure équipée (1) sur un cadre (2-5) du châssis du véhicule.

11. Procédé selon la revendication 10, **caractérisé en ce qu'**il consiste à introduire (F₄) une roue de secours (6) dans ledit logement (11) après montage de ladite structure sur le châssis et à immobiliser ladite roue dans ledit logement par encliquetage (F₅) d'un pion central (40) solidaire de, ou apte à être solidarisé (F₆) avec, un dispositif de blocage (20) de ladite roue de secours dans ledit logement.

## Patentansprüche

1. Durch Formen von Kunststoffmaterial hergestellte Konstruktion (1), die die rückwärtige Bodenplatte eines Kraftfahrzeugs und einen Sitz (11) zur Aufnahme eines Reserverads (6) des Fahrzeugs bildet, wobei die Konstruktion in einem Aufnahmerahmen (2 - 5) des Fahrzeugs aufgenommen werden kann und im Inneren des Rahmens selbsttragend ist, wobei die Konstruktion (1) mit Mitteln (18, 20, 40, 50) zur Zentrierung des Rads (6) in dem Sitz (11) versehen ist, **dadurch gekennzeichnet, dass** die Mittel des Weiteren Mittel zur Festlegung des Rads in dem Sitz sind und einen Gewindezapfen (40), eine Mutter (50), die zum Zusammenwirken mit dem Gewinde (44) des Zapfens vorgesehen ist, und eine Platte (20) umfassen, während der Zapfen, die Mutter und die Platte auf das Rad (6) eine zum Boden (13) des Sitzes gerichtete Kraft zur Druckfestlegung ausüben können.

2. Konstruktion nach Anspruch 1, **dadurch gekennzeichnet, dass** sie Sitze (14, 26, 32-35) zur Aufnahme von Zusatz- oder Zubehörelementen des Fahrzeugs, wie zum Beispiel einem Schmiermittelkanister, einem Abschleppseil, Schutzkleidung, einem Werkzeug- oder Erste-Hilfe-Kasten, einer Glühlampenschachtel und/oder einem Wagenheber für das Fahrzeug, bildet.

3. Konstruktion nach Anspruch 1 oder 2, **dadurch gekennzeichnet, dass** der Boden (13) des Sitzes (11) mit einer Buchse (18) zur Aufnahme des mittleren Zapfens (40) zur Festlegung des Reserverads (6) versehen ist.

4. Konstruktion nach Anspruch 3, **dadurch gekennzeichnet, dass** der Zapfen (40) durch Zusammenwirken von Formen (18, 41) in der Buchse festgelegt ist und Mittel (42) zum Einrasten in der Buchse aufweist.

5. Konstruktion nach einem der vorhergehenden Ansprüche, **dadurch gekennzeichnet, dass** die Mutter (50) gespalten und zum Schrumpfsitz in einem Zentrallager (21) der Platte (20) zur Festlegung des Reserverads (6) in dem Sitz (11) vorgesehen ist.

6. Konstruktion nach Anspruch 5, **dadurch gekennzeichnet, dass** die Mutter (50) mit Umfangsvorsprüngen (53) versehen ist, die in innere Längsnuten (22) des Lagers aufgenommen werden, wobei die Vorsprünge in den Nuten translatorisch verschiebbar (F₁) sind und durch Drehung (F₂) der Mutter bezüglich einer mittleren Achse (X-X') des Lagers in die Nuten verlängernden Kerben (23) verriegelt werden können.

7. Konstruktion nach Anspruch 5 oder 6, **dadurch gekennzeichnet, dass** die Platte (20) mit Rippen (24) zur Versteifung und zum Fest-/Losschrauben versehen ist, die zwischen sich Räume (26) zur Aufnahme von Zusatz- oder Zubehörelementen des Fahrzeugs bilden.

8. Konstruktion nach einem der vorhergehenden Ansprüche, **dadurch gekennzeichnet, dass** sie eine Tafel (30) zum Verschließen des Sitzes aufweist, die aus Kunststoff geformt ist und Sitze (32-35) zur Aufnahme von Zusatz- oder Zubehörelementen des Fahrzeugs bildet.

9. Konstruktion nach einem der vorhergehenden Ansprüche, **dadurch gekennzeichnet, dass** sie mit Gittern (15), die mit Rückluftzirkulationssperren nur zwischen dem Innenraum der Fahrgastzelle des Fahrzeugs und der umgebenden Atmosphäre versehen sind, und/oder Ansätzen (16) zum Verstauen oder Abschleppen ausgestattet ist.

10. Verfahren zur Herstellung eines Kraftfahrzeugs, bei dem man eine Konstruktion (1) aus Kunststoffmaterial formt, die eine rückwärtige Bodenplatte und einen Sitz (11) zur Aufnahme eines Reserverads (6) des Fahrzeugs bildet, **dadurch gekennzeichnet, dass** man dabei:
- die Konstruktion mit Zusatz- oder Zubehörelementen des Fahrzeugs ausrüstet und
- die ausgerüstete Konstruktion (1) an einen Rahmen (2-5) des Fahrzeugchassis montiert (F₃).

11. Verfahren nach Anspruch 10, **dadurch gekennzeichnet, dass** man dabei nach der Montage der Konstruktion an das Chassis ein Reserverad (6) in den Sitz (11) einführt (F₄) und das Rad durch Einrasten (F₅) eines mittleren Zapfens (40), der fest mit einer Vorrichtung (20) zur Verriegelung des Reserverads in dem Sitz verbunden ist oder damit fest verbunden werden kann (F₆), in dem Sitz festlegt.

## Claims

1. Structure (1) produced by moulding plastics material and forming the rear floor of an automotive vehicle and the housing (11) for accommodating a spare wheel (6) of the vehicle, said structure being capable of being accommodated in a receiving frame (2-5) of said vehicle and being self-supporting within said frame, and said structure (1) being provided with means (18, 20, 40, 50) for centring said wheel (6) in said housing (11), **characterised in that** said means are also means for immobilising said wheel in said housing and comprise a threaded spindle (40), a nut (50) which is designed to co-operate with the thread (44) of said spindle, and a plate (20), while said spindle, said nut and said plate are capable of exerting an immobilising force on said wheel (6) by pressure directed towards the base (13) of said housing.

2. Structure according to claim 1, **characterised in that** it forms housings (14, 26, 32-35) for accommodating supplementary or accessory elements of said vehicle, such as an oil can, a tow-rope, protective clothes, a toolkit or first aid kit, a box of bulbs and/or a jack for raising the vehicle.

3. Structure according to one of claims 1 or 2, **characterised in that** said base (13) of said housing (11) is provided with a sleeve (18) for accommodating the central spindle (40) for immobilising said spare wheel (6).

4. Structure according to claim 3, **characterised in that** said spindle (40) is immobilised in said sleeve by the co-operation of forms (18, 41) and carries means (42) for clipping into said sleeve.

5. Structure according to one of the preceding claims, **characterised in that** said nut (50) is split and designed to be banded in a central bearing (21) of said plate (20) for immobilising said spare wheel (6) in said housing (11).

6. Structure according to claim 5, **characterised in that** said nut (50) is provided with peripheral projections (53) accommodated in internal longitudinal grooves (22) of said bearing, said projections being displaceable in translation (F₁) in said grooves and capable of being locked in notches (23), which extend said grooves, by rotation (F₂) of said nut relative to a central axis (X-X') of said bearing.

7. Structure according to one of claims 5 or 6, **characterised in that** said plate (20) is provided with reinforcing and screwing/unscrewing ribs (24) which define therebetween areas (26) for accommodating supplementary or accessory elements of the vehicle.

8. Structure according to one of the preceding claims, **characterised in that** it comprises a panel (30) for closing said housing, said panel being moulded from plastics material and forming housings (32-35) for accommodating supplementary or accessory elements of the vehicle.

9. Structure according to one of the preceding claims, **characterised in that** it is fitted with grilles (15), which are provided with non-return valves for circulating air, solely between the internal area of the interior of the vehicle and the ambient atmosphere, and/or with a lug (16) for stowage or towing.

10. Method of manufacturing an automotive vehicle, in which a structure (1) is moulded from plastics material and forms the rear floor and housing (11) for accommodating a spare wheel (6) of the vehicle, **characterised in that** it comprises steps consisting of:
- equipping said structure with supplementary or accessory elements of the vehicle and
- assembling (F₃) said equipped structure (1) on a frame (2-5) of the chassis of the vehicle.

11. Method according to claim 10, **characterised in that** it consists of introducing (F4) a spare wheel (6) into said housing (11), after assembling said structure on the chassis, and of immobilising said wheel in said housing by clipping-in (F5) a central spindle (40), which is integral with, or is capable of being made integral (F6) with, a device (20) for locking said spare wheel in said housing.
